(19) Europäisches Patentamt
European Patent Office
Office européen des brevets

(11) **EP 4 414 749 A1**

(12) **EUROPEAN PATENT APPLICATION**
published in accordance with Art. 153(4) EPC

(43) Date of publication:
**14.08.2024 Bulletin 2024/33**

(51) International Patent Classification (IPC):
$G01S\ 19/46^{(2010.01)}$    $G01S\ 19/47^{(2010.01)}$
$G01S\ 17/931^{(2020.01)}$    $G01S\ 17/86^{(2020.01)}$
$G01S\ 13/931^{(2020.01)}$    $G01S\ 13/86^{(2006.01)}$
$G01S\ 15/931^{(2020.01)}$    $G01S\ 15/86^{(2020.01)}$
$G01C\ 21/16^{(2006.01)}$    $G01C\ 22/00^{(2006.01)}$

(21) Application number: 22885342.0

(22) Date of filing: 18.08.2022

(86) International application number:
**PCT/CN2022/113271**

(87) International publication number:
**WO 2023/071442 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 29.10.2021 CN 202111276896

(71) Applicant: Huawei Technologies Co., Ltd.
Shenzhen, Guangdong 518129 (CN)

(72) Inventors:
• WANG, Leijie
Shenzhen, Guangdong 518129 (CN)
• LIU, Zhenbo
Shenzhen, Guangdong 518129 (CN)
• WEN, Feng
Shenzhen, Guangdong 518129 (CN)
• ZHANG, Hongbo
Shenzhen, Guangdong 518129 (CN)

(74) Representative: Epping - Hermann - Fischer
Patentanwaltsgesellschaft mbH
Schloßschmidstraße 5
80639 München (DE)

(54) **DATA PROCESSING METHOD AND APPARATUS**

(57) A data processing method and apparatus are provided. The method includes: determining first pose information of a vehicle (100) at a second moment based on pose information of the vehicle (100) at a first moment and a first model, where the first model is a pose estimation model from the first moment to the second moment (S801); obtaining data collected by one or more sensors (S802); and determining second pose information of the vehicle (100) at the second moment based on the first pose information and the data (S803). Embodiments may be applied to the field of intelligent driving, to help avoid a reduction in precision of an odometry caused by a fault of a single sensor, thereby helping improve stability and reliability of the vehicle (100) in a navigation process.

800

Determine first pose information of a vehicle at a second moment based on pose information of the vehicle at a first moment and a first model   801

Obtain data collected by one or more sensors   802

Determine second pose information of the vehicle at the second moment based on the first pose information and the data   803

FIG. 8

EP 4 414 749 A1

## Description

This application claims priority to Chinese Patent Application No. 202111276896.2, filed with the China National Intellectual Property Administration on October 29, 2021 and entitled "DATA PROCESSING METHOD AND APPARATUS", which is incorporated herein by reference in its entirety.

## TECHNICAL FIELD

This application relates to the field of intelligent driving, and more specifically, to a data processing method and apparatus.

## BACKGROUND

As the most fundamental service module of autonomous driving or assisted driving, an odometry can provide relative positioning information for planning and control, sensing, fusion, prediction, and other modules. Different from a requirement for absolute precision in global positioning, a requirement for the odometry in the autonomous driving is that the odometry is continuous, smooth, stable, and reliable, works upon power-on, and can ensure specific relative positioning precision. In an increasingly complex autonomous driving or assisted driving scenario, there are increasingly high requirements for precision and reliability of the odometry. Currently, a commonly used odometry has many limitations. For example, during vehicle traveling, information (for example, angular velocity information and acceleration information) output by an inertial measurement unit (inertial measurement unit, IMU) is usually used as prediction. When the IMU is blocked or faulty, precision of the odometry is severely reduced, or the odometry even cannot work normally. This affects normal running of a vehicle and may cause a serious security risk.

## SUMMARY

This application provides a data processing method and apparatus, to help avoid a reduction in precision of an odometry caused by a fault of a single sensor, thereby helping improve stability and reliability of a vehicle in a navigation process.

According to a first aspect, a data processing method is provided. The method is applied to a vehicle, the vehicle includes one or more sensors, and the method includes: determining first pose information of the vehicle at a second moment based on pose information of the vehicle at a first moment and a first model, where the first model is a pose estimation model from the first moment to the second moment; obtaining data collected by one or more sensors; and determining second pose information of the vehicle at the second moment based on the first pose information and the data.

In this embodiment of this application, first pose information at a current moment may be estimated based on pose information at a previous moment and a first model, and then second pose information at the current moment is obtained based on the estimated first pose information at the current moment and sensor data. There is no need to estimate the pose information at the current moment based on data output by a single sensor (for example, an IMU), to avoid a reduction in precision of an odometry caused by a fault of the sensor, thereby helping improve stability and reliability of the vehicle in a navigation process.

It should be understood that the vehicle may include one or more different types of transportation, or may include one or more different types of transportation tools or movable objects that operate or move on land (for example, a highway, a road, or a railway), water surface (for example, a waterway, a river, or an ocean), or in space. For example, the vehicle may include a car, a bicycle, a motorcycle, a train, a subway, an airplane, a ship, an aircraft, a robot, an uncrewed aerial vehicle, or another type of transportation tool or movable object. This is not limited in this embodiment of this application.

In some possible implementations, the first model may be stored in a cloud server, the vehicle may send the pose information at the first moment to the cloud server, and the cloud server determines the first pose information of the vehicle at the second moment based on the pose information at the first moment and the first model. The cloud server may send the first pose information to the vehicle, so that the vehicle may determine the second pose information of the vehicle at the second moment based on the data collected by the sensor and the first pose information.

With reference to the first aspect, in some implementations of the first aspect, the determining first pose information of the vehicle at a second moment based on pose information of the vehicle at a first moment and a first model includes: determining an initial state transition matrix of the vehicle at the first moment based on the pose information of the vehicle at the first moment and the first model; and determining the first pose information based on the initial state transition matrix.

In this embodiment of this application, the vehicle may first determine the initial state transition matrix based on the pose information of the first moment and the first model, and then determine the first pose information at the second moment based on the initial state transition matrix. There is no need to estimate the pose information at the current moment based on the data output by the single sensor (for example, the IMU), to avoid the reduction in the precision of the odometry caused by the fault of the sensor, thereby helping improve the stability and reliability of the vehicle in the navigation process.

In some possible implementations, the first model includes one or more of a location estimation model from the first moment to the second moment, a speed estimation model from the first moment to the second moment, an acceleration estimation model from the first moment to the second moment, a roll estimation model from the first moment to the second moment, a pitch estimation model from the first moment to the second moment, a yaw estimation model from the first moment to the second moment, and an angular velocity estimation model from the first moment to the second moment.

In this embodiment of this application, the first model may include one or more of the location, speed, acceleration, roll, pitch, yaw, and angular velocity estimation models. The pose information of the vehicle at the current moment may be predicted based on these models, so that the pose information at the current moment does not need to be predicted based on the data output by the single sensor, to avoid the reduction in the precision of the odometry caused by the fault of the sensor, thereby helping improve the stability and reliability of the vehicle in the navigation process. In some possible implementations, the first model is determined according to one or more of the following formulas:

$$P_k^n = P_{k-1}^n + C_b^n V_{k-1}^b T + 0.5 * C_b^n a_{k-1}^b T^2$$

$$V_k^b = V_{k-1}^b + a_{k-1}^b T$$

$$a_k^b = a_{k-1}^b$$

$$\phi_k = \phi_{k-1} + \dot{\phi}_{K-1} T + \dot{\theta}_{k-1} \sin \phi_{k-1} \tan \theta_{k-1} T + \dot{\varphi}_{k-1} \cos \phi_{k-1} \tan \theta_{k-1} T$$

$$\theta_k = \theta_{k-1} + \dot{\theta}_{k-1} \cos \theta_{k-1} T - \dot{\varphi}_{k-1} \sin \phi_{k-1} T$$

$$\varphi_k = \varphi_{k-1} + \dot{\theta}_{k-1} \frac{\sin \phi_{k-1}}{\cos \theta_{k-1}} T + \dot{\varphi}_{k-1} \frac{\cos \phi_{k-1}}{\cos \theta_{k-1}} T$$

$$w_k^b = w_{k-1}^b$$

$P_k^n$ is a location of the vehicle at the second moment in an odometry coordinate system. $P_{k-1}^n$ is a location of the vehicle at the first moment in the odometry coordinate system. $C_b^n$ is a rotation matrix from a vehicle coordinate system to the odometry coordinate system. $V_{k-1}^b$ is a speed of the vehicle at the first moment in the vehicle coordinate system.

T is a time difference between the first moment and the second moment. $a_{k-1}^b$ is an acceleration of the vehicle at the first moment in the vehicle coordinate system. $a_k^b$ is an acceleration of the vehicle at the second moment in the vehicle coordinate system. $V_k^b$ is a speed of the vehicle at the second moment in the vehicle coordinate system. $\phi_k$ is a roll of the vehicle at the second moment. $\phi_{k-1}$ is a roll of the vehicle at the first moment. $\theta_{k-1}$ is a pitch of the vehicle at

a (k-1)<sup>th</sup> moment. $\dot{\phi}_{K-1}$ is a roll rate of the vehicle at the first moment. $\dot{\theta}_{k-1}$ is a pitch rate of the vehicle at the first moment. $\dot{\varphi}_{k-1}$ is a yaw rate of the vehicle at the first moment. $\theta_k$ is a pitch of the vehicle at the second moment. $\theta_{k-1}$ is a pitch of the vehicle at the first moment. $\varphi_k$ is a yaw of the vehicle at the second moment. $\varphi_{k-1}$ is a yaw of the vehicle at the first moment. $W_k^b$ is an angular velocity of the vehicle at the second moment in the vehicle coordinate system. $W_{k-1}^b$ is an angular velocity of the vehicle at the first moment in the vehicle coordinate system.

With reference to the first aspect, in some implementations of the first aspect, the method further includes: determining first covariance information of the vehicle at the second moment based on covariance information of the vehicle at the first moment and the first model; and determining second covariance information of the vehicle at the second moment based on the first covariance information and the data.

In this embodiment of this application, first covariance information at the current moment may be estimated based on covariance information at the previous moment and the first model, and then second covariance information at the current moment is obtained based on the estimated first covariance information at the current moment and the sensor data. There is no need to estimate the covariance information at the current moment based on the data output by the single sensor (for example, the IMU), to avoid the reduction in the precision of the odometry caused by the fault of the sensor, thereby helping improve the stability and reliability of the vehicle in the navigation process.

With reference to the first aspect, in some implementations of the first aspect, before the determining second pose information of the vehicle at the second moment based on the first pose information and the data, the method further includes: obtaining a first calibration result, where the first calibration result includes an online calibration result and/or an offline calibration result.

The determining second pose information of the vehicle at the second moment based on the first pose information and the data includes: performing error compensation on the data based on the first calibration result to obtain error-compensated data; and determining the second pose information based on the first pose information and the error-compensated data.

In this embodiment of this application, error compensation is performed on the sensor in an online or offline calibration manner, to help further improve the precision of the odometry.

In some possible implementations, the vehicle may perform a cross-check on an online calibration result and an offline calibration result of a same parameter, to ensure accuracy of the calibration parameter.

With reference to the first aspect, in some implementations of the first aspect, the first calibration result includes one or more of a wheel speed scale coefficient, a zero offset of an inertial measurement unit IMU, and a lever arm parameter.

With reference to the first aspect, in some implementations of the first aspect, before the performing error compensation on the data based on the first calibration result, the method further includes: performing a check on the data.

In some possible implementations, a check manner includes but is not limited to a rationality check, a cross-check, and the like.

With reference to the first aspect, in some implementations of the first aspect, the determining second pose information of the vehicle at the second moment based on the first pose information and the data includes: performing an optimal estimation based on the first pose information and the data to obtain the second pose information.

In some possible implementations, the performing an optimal estimation based on the first pose information and the data includes: performing the optimal estimation through Kalman filtering based on the first pose information and the data; or performing the optimal estimation through non-Kalman filtering based on the first pose information and the data.

In this embodiment of this application, the first pose information that is at the current moment and that is determined based on the pose information of the vehicle at the previous moment and the first model is used as a predicted value, and the data output by the sensor (or data obtained after the data output by the sensor is processed) is used as an observed value. The second pose information of the vehicle at the current moment may be obtained by performing the optimal estimation through Kalman filtering. This helps avoid dependency on the single sensor, and resolves a problem that the precision of the odometry is severely reduced, or the odometry even cannot work normally because of a fault in the IMU, thereby improving the stability and reliability of the vehicle.

According to a second aspect, a data processing apparatus is provided. The apparatus includes: a determining unit, configured to determine first pose information of a vehicle at a second moment based on pose information of the vehicle at a first moment and a first model, where the first model is a pose estimation model from the first moment to the second moment; and an obtaining unit, configured to obtain data collected by one or more sensors. The determining unit is further configured to determine second pose information of the vehicle at the second moment based on the first pose information and the data.

With reference to the second aspect, in some implementations of the second aspect, the determining unit is specifically configured to: determine an initial state transition matrix of the vehicle at the first moment based on the pose information of the vehicle at the first moment and the first model; and determine the first pose information based on the initial state transition matrix. In some possible implementations, the first model includes one or more of a location estimation model from the first moment to the second moment, a speed estimation model from the first moment to the second moment, an acceleration estimation model from the first moment to the second moment, a roll estimation model from the first moment to the second moment, a pitch estimation model from the first moment to the second moment, a yaw estimation model from the first moment to the second moment, and an angular velocity estimation model from the first moment to the second moment.

In some possible implementations, the first model is determined according to one or more of the following formulas:

$$P_k^n = P_{k-1}^n + C_b^n V_{k-1}^b T + 0.5 * C_b^n a_{k-1}^b T^2$$

$$V_k^b = V_{k-1}^b + a_{k-1}^b T$$

$$a_k^b = a_{k-1}^b$$

$$\phi_k = \phi_{k-1} + \dot{\phi}_{K-1} T + \dot{\theta}_{k-1} \sin\phi_{k-1} \tan\theta_{k-1} T + \dot{\varphi}_{k-1} \cos\phi_{k-1} \tan\theta_{k-1} T$$

$$\theta_k = \theta_{k-1} + \dot{\theta}_{k-1} \cos\theta_{k-1} T - \dot{\varphi}_{k-1} \sin\phi_{k-1} T$$

$$\varphi_k = \varphi_{k-1} + \dot{\theta}_{k-1} \frac{\sin\phi_{k-1}}{\cos\theta_{k-1}} T + \dot{\varphi}_{k-1} \frac{\cos\phi_{k-1}}{\cos\theta_{k-1}} T$$

$$w_k^b = w_{k-1}^b$$

$P_k^n$ is a location of the vehicle at the second moment in an odometry coordinate system. $P_{k-1}^n$ is a location of the vehicle at the first moment in the odometry coordinate system. $C_b^n$ is a rotation matrix from a vehicle coordinate system to the odometry coordinate system. $V_{k-1}^b$ is a speed of the vehicle at the first moment in the vehicle coordinate system. T is a time difference between the first moment and the second moment. $a_{k-1}^b$ is an acceleration of the vehicle at the first moment in the vehicle coordinate system. $a_k^b$ is an acceleration of the vehicle at the second moment in the vehicle coordinate system. $V_k^b$ is a speed of the vehicle at the second moment in the vehicle coordinate system. $\phi_k$ is a roll of the vehicle at the second moment. $\phi_{k-1}$ is a roll of the vehicle at the first moment. $\theta_{k-1}$ is a pitch of the vehicle at a (k-1)th moment. $\dot{\phi}_{K-1}$ is a roll rate of the vehicle at the first moment. $\dot{\theta}_{k-1}$ is a pitch rate of the vehicle at the first

moment. $\varphi_{k-1}$ is a yaw rate of the vehicle at the first moment. $\theta_k$ is a pitch of the vehicle at the second moment. $\theta_{k-1}$ is a pitch of the vehicle at the first moment. $\varphi_k$ is a yaw of the vehicle at the second moment. $\varphi_{k-1}$ is a yaw of the vehicle at the first moment. $W_k^b$ is an angular velocity of the vehicle at the second moment in the vehicle coordinate system. $W_{k-1}^b$ is an angular velocity of the vehicle at the first moment in the vehicle coordinate system.

With reference to the second aspect, in some implementations of the second aspect, the determining unit is further configured to: determine first covariance information of the vehicle at the second moment based on covariance information of the vehicle at the first moment and the first model; and determine second covariance information of the vehicle at the second moment based on the first covariance information and the data.

With reference to the second aspect, in some implementations of the second aspect, the obtaining unit is further configured to obtain a first calibration result before the determining unit determines the second pose information of the vehicle at the second moment based on the first pose information and the data, where the first calibration result includes an online calibration result and/or an offline calibration result. The determining unit is specifically configured to: perform error compensation on the data based on the first calibration result to obtain error-compensated data; and determine the second pose information based on the first pose information and the error-compensated data.

With reference to the second aspect, in some implementations of the second aspect, the first calibration result includes one or more of a wheel speed scale coefficient, a zero offset of an inertial measurement unit IMU, and a lever arm parameter.

With reference to the second aspect, in some implementations of the second aspect, the apparatus further includes: a checking unit, configured to perform a check on the data before the determining unit performs error compensation on the data based on the first calibration result.

With reference to the second aspect, in some implementations of the second aspect, the determining unit is specifically configured to perform an optimal estimation through Kalman filtering based on the first pose information and the data to obtain the second pose information. According to a third aspect, a data processing apparatus is provided. The apparatus includes: a memory, configured to store computer instructions; and a processor, configured to execute the computer instructions stored in the memory, so that the apparatus performs the method in the first aspect.

According to a fourth aspect, a vehicle is provided. The vehicle includes the apparatus according to the second aspect or the third aspect.

According to a fifth aspect, a computer program product is provided. The computer program product includes computer program code. When the computer program code is run on a computer, the computer is enabled to perform the method in the first aspect.

It should be noted that all or some of computer program code may be stored in a first storage medium. The first storage medium may be encapsulated together with a processor, or may be encapsulated separately from a processor. This is not specifically limited in this embodiment of this application.

According to a sixth aspect, a computer-readable medium is provided. The computer-readable medium stores program code. When the computer program code is run on a computer, the computer is enabled to perform the method in the first aspect.

According to a seventh aspect, an embodiment of this application provides a chip system. The chip system includes a processor, configured to invoke a computer program or computer instructions stored in a memory, so that the processor performs the method according to any one of the foregoing aspects.

With reference to the seventh aspect, in a possible implementation, the processor is coupled to the memory through an interface.

With reference to the seventh aspect, in a possible implementation, the chip system further includes the memory. The memory stores the computer program or the computer instructions.

## BRIEF DESCRIPTION OF DRAWINGS

FIG. 1 is a schematic block diagram of a vehicle according to an embodiment of this application;
FIG. 2 is a schematic diagram of an application scenario according to an embodiment of this application;
FIG. 3 is a block diagram of a system application according to an embodiment of this application;
FIG. 4 is a schematic diagram of a process of processing data from sensors according to an embodiment of this application;

FIG. 5 is a schematic diagram of a data processing process of an odometry fusion module according to an embodiment of this application;

FIG. 6 is a schematic flowchart of a data processing method according to an embodiment of this application;

FIG. 7 is a schematic diagram of a traveling trajectory obtained through testing in a manner according to an embodiment of this application;

FIG. 8 is another schematic flowchart of a data processing method according to an embodiment of this application;

FIG. 9 is a schematic block diagram of a data processing apparatus according to an embodiment of this application; and

FIG. 10 is another schematic block diagram of a data processing apparatus according to an embodiment of this application.

## DESCRIPTION OF EMBODIMENTS

The following describes technical solutions of this application with reference to accompanying drawings.

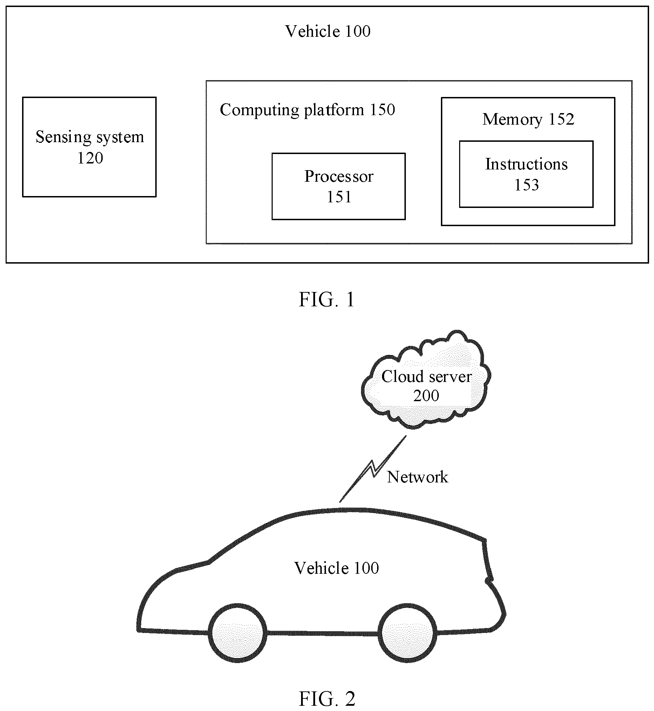

FIG. 1 is a schematic block diagram of a vehicle 100 according to an embodiment of this application. The vehicle 100 may include a sensing system 120 and a computing platform 150.

The sensing system 120 may include several types of sensors that sense information about an ambient environment of the vehicle 100. For example, the sensing system 120 may include a positioning system (the positioning system may be a global positioning system (global positioning system, GPS) system, a BeiDou system, or another positioning system), an IMU, a LiDAR, a millimeter-wave radar, an ultrasonic radar, an image shooting apparatus, and a wheel speed sensor (wheel speed sensor, WSS). A visual odometry (visual odometry, VO) may estimate a pose of the vehicle based on image data output by the image shooting apparatus. A LiDAR odometry (LiDAR odometry, LO) may estimate the pose of the vehicle based on point cloud data output by the LiDAR. The sensing system 120 may further include sensors (for example, an in-vehicle air quality monitor, a fuel gauge, and an oil temperature gauge) of an internal system of the vehicle 100 that is monitored. Sensor data from one or more of these sensors may be used to detect an object and corresponding features (a location, a shape, a direction, a speed, and the like) of the object. Such detection and recognition are key functions of safe operation of the vehicle 100.

Some or all functions of the vehicle 100 are controlled by the computing platform 150. The computing platform 150 may include at least one processor 151. The processor 151 may execute instructions 153 stored in a non-transitory computer-readable medium such as a memory 152.

In some embodiments, the computing platform 150 may alternatively be a plurality of computing devices that control individual components or subsystems of the vehicle 100 in a distributed manner. The processor 151 may be any conventional processor, such as a central processing unit (central processing unit, CPU). Alternatively, the processor 151 may further include a graphics processing unit (graphics processing unit, GPU), a field-programmable gate array (field-programmable gate array, FPGA), a system on chip (system on chip, SOC), an application-specific integrated circuit (application-specific integrated circuit, ASIC), or a combination thereof.

In addition to the instructions 153, the memory 152 may further store data, such as a road map, route information, a position, a direction, a speed, and other vehicle data of the vehicle, and other information. Such information may be used by the vehicle 100 and the computing platform 150 during operation of the vehicle 100 in autonomous, semi-autonomous, and/or manual modes.

It should be understood that a structure of the vehicle in FIG. 1 should not be understood as a limitation on this embodiment of this application.

It should be further understood that the vehicle 100 may include one or more different types of transportation, or may include one or more different types of transportation tools or movable objects that operate or move on land (for example, a highway, a road, or a railway), water surface (for example, a waterway, a river, or an ocean), or in space. For example, the vehicle may include a car, a bicycle, a motorcycle, a train, a subway, an airplane, a ship, an aircraft, a robot, an uncrewed aerial vehicle, or another type of transportation tool or movable object. This is not limited in this embodiment of this application.

As described above, in an increasingly complex autonomous driving or assisted driving scenario, there are increasingly high requirements for precision and reliability of the odometry. Currently, a commonly used odometry has many limitations. For example, during vehicle traveling, information (for example, angular velocity information and acceleration information) output by the IMU is usually used as a predicted value. When the IMU is blocked or faulty, the precision of the odometry is severely reduced, or the odometry even cannot work normally. This affects normal running of the vehicle and may cause a serious security risk.

Embodiments of this application provides a data processing method and apparatus, to help avoid a reduction in precision of an odometry caused by a fault of a single sensor, thereby helping improve stability and reliability of a vehicle in a navigation process. Specifically, the vehicle may use a motion status at a previous moment as a predicted value, and use information output by a plurality of sensors as an observed value, to perform an optimal estimation on a pose of the vehicle, to obtain pose information of the vehicle at a current moment. The vehicle may obtain motion information or positioning information of the vehicle based on the pose information at the current moment.

Before embodiments of this application are described, terms in embodiments of this application are first explained.

A predicted value is a motion status that is at a current moment and that is predicted based on a motion status at a previous moment.

An observed value is data measured by a sensor at the current moment.

The predicted value and the observed value may be used for an optimal estimation, to obtain a more accurate motion status at the current moment.

FIG. 2 is a schematic diagram of an application scenario according to an embodiment of this application. In this application scenario, a vehicle 100 and a cloud service system 200 may be included. The vehicle 100 and the cloud service system 200 may communicate with each other over a network. The vehicle 100 may send, to the cloud server 200, a motion status at a previous moment (for example, a location, a speed, an acceleration, a yaw, and a roll of the vehicle at the previous moment) and information output by one or more sensors at a current moment (for example, image data collected by a camera at the current moment and point cloud data collected by a LiDAR at the current moment). The cloud server 200 may use a motion status that is at the current moment and that is predicted based on the motion status at the previous moment as a predicted value, and the predicted value may be used to indicate first pose information and first covariance information of the vehicle at the current moment. The cloud server 200 may use information output by the one or more sensors as an observed value, and the observed value may be used to indicate a sensing result and a measurement result of the sensor in the vehicle on an ambient environment of the vehicle at the current moment. The vehicle may perform an optimal estimation based on the predicted value and the observed value, to obtain second pose information and second covariance information of the vehicle 100 at the current moment. The cloud server 200 may send the second pose information and the second covariance information at the current moment to the vehicle 100, so that the vehicle 100 may obtain motion information or positioning information of the vehicle 100 based on the second pose information and the second covariance information at the current moment.

Alternatively, the vehicle 100 may send pose information at the previous moment to the cloud server, and the cloud server determines the first pose information of the vehicle 100 at the current moment based on the pose information at the previous moment and a first model. The cloud server 200 may send the first pose information to the vehicle 100, so that the vehicle 100 may determine the second pose information of the vehicle 100 at the current moment based on the information output by the one or more sensors and the first pose information.

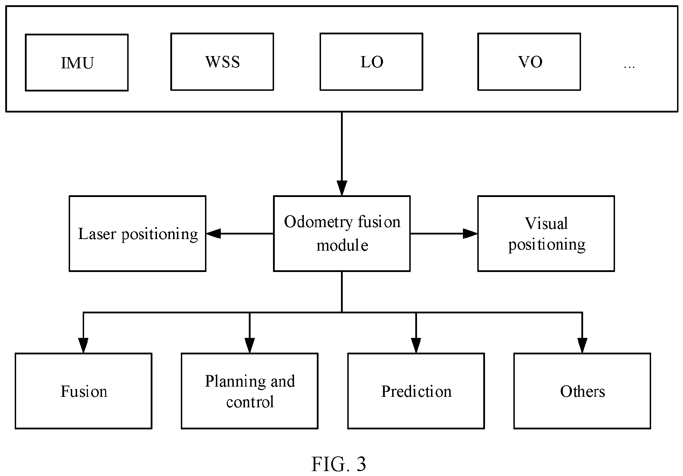

FIG. 3 is a block diagram of a system application according to an embodiment of this application. An intelligent driving scenario is used as an example. An input into an odometry fusion module includes but is not limited to information from an IMU, a WSS, a VO, an LO, and the like. After the information is processed by the odometry fusion module, pose information and covariance information of a vehicle at a current moment can be output. The information output by the odometry fusion module may provide relative motion information of the vehicle for laser positioning and visual positioning, and may also provide continuous and smooth relative positioning information for sensing and fusion, planning and control, prediction, and other modules.

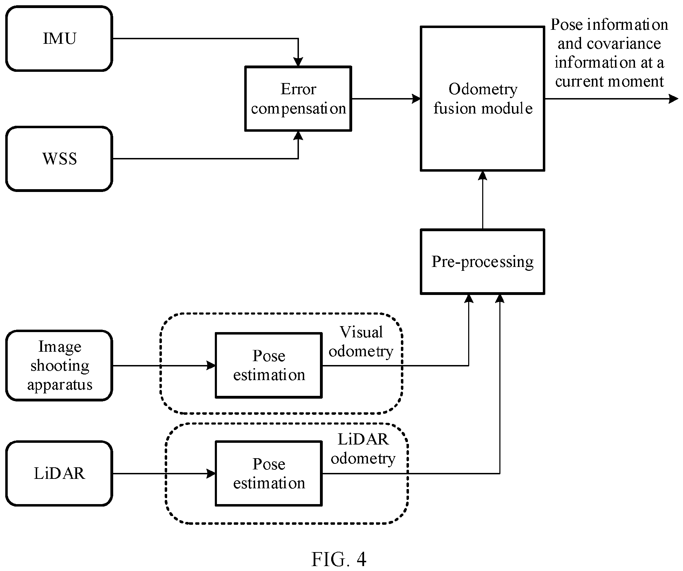

FIG. 4 shows a process of processing data from sensors according to an embodiment of this application. As shown in FIG. 4, after error compensation is performed on data output by an IMU and data output by a WSS, error-compensated data of the IMU and error-compensated data of the WSS may be obtained respectively. The error-compensated data of the IMU and the error-compensated data of the WSS may be used as inputs into an odometry fusion module. Pose estimations are respectively performed by a visual odometry and a LiDAR odometry on data output by an image shooting apparatus and data output by a LiDAR, to obtain pre-processed information of the visual odometry VO and pre-processed information of the LiDAR odometry LO. The pre-processed information may be used as an input into the odometry fusion module. It should be understood that the input into the odometry fusion module may be one or more of the foregoing information. The odometry fusion module can output pose information and covariance information at a current moment based on the input information.

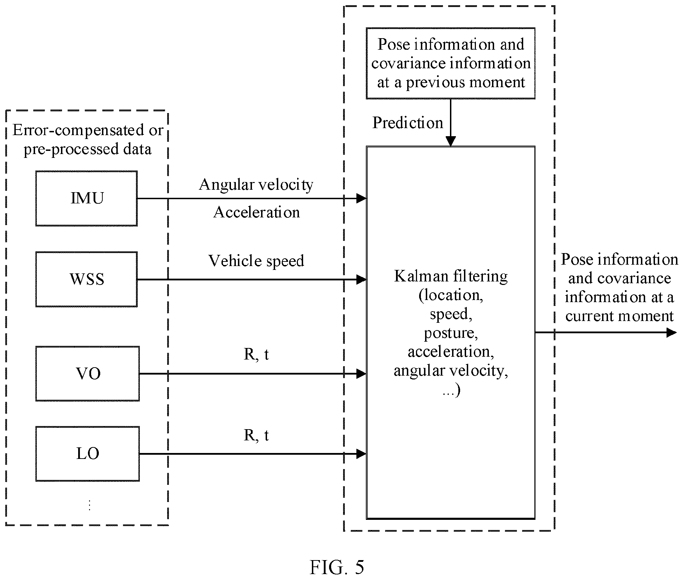

FIG. 5 is a schematic diagram of a data processing process of an odometry fusion module according to an embodiment of this application. Error-compensated data of an IMU, error-compensated data of a WSS, pre-processed data of an LO, and pre-processed data of a VO may be used as inputs into Kalman filtering. The data of the IMU includes angular velocity information and acceleration information of a vehicle, and the data of the WSS includes vehicle speed information. R indicates a rotation matrix, and t indicates a translation vector.

It should be understood that the data processing process shown in FIG. 5 is described by using an example in which a Kalman filtering (Kalman filtering, KF) framework is used. This embodiment of this application is not limited thereto. For example, a non-Kalman filtering framework may also be used in the data processing process.

The odometry fusion module may use a motion status of the vehicle at a previous moment (for example, pose information and covariance information at the previous moment) as a predicted value, use error-compensated or pre-processed sensor data as an observed value, perform an optimal estimation through Kalman filtering, and output pose information and covariance information at a current moment.

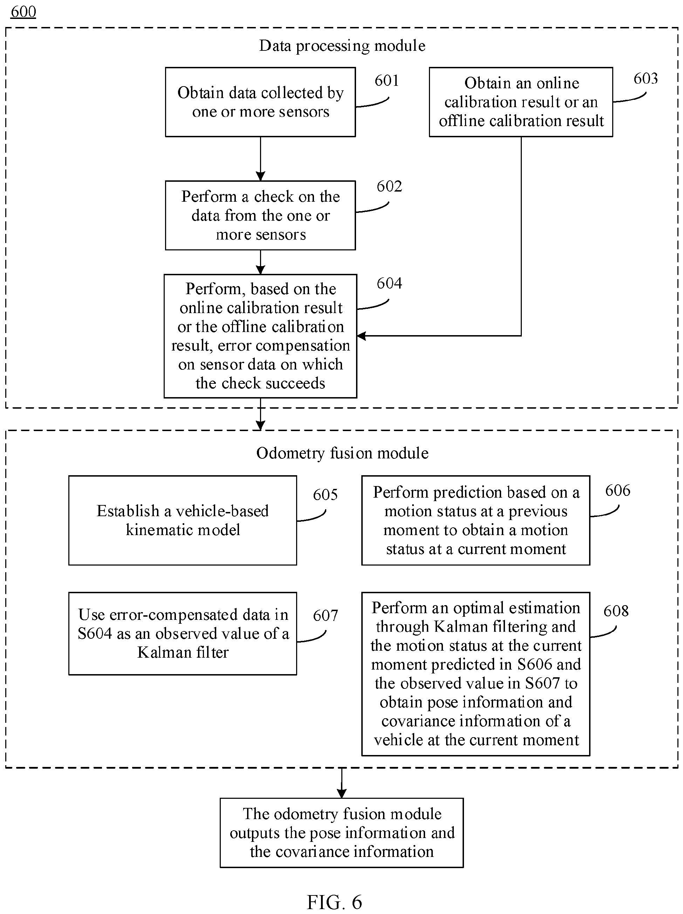

FIG. 6 is a schematic flowchart of a data processing method 600 according to an embodiment of this application. As shown in FIG. 6, the method 600 includes the following steps.

S601: A data processing module obtains data collected by one or more sensors.

In an embodiment, the data processing module may be located in a vehicle, or may be located in a cloud server. This is not limited in this embodiment of this application.

For example, the one or more sensors may be one or more of an IMU, a WSS, an image shooting apparatus, or a LiDAR.

It should be understood that the following describes an example in which data of the IMU and data of the WSS are obtained. The data of the IMU may include information such as an angular velocity and an acceleration. The data of the WSS may include information such as wheel speeds of four wheels of the vehicle and a steering wheel angle.

In an embodiment, the data processing module may create three or more independent threads, including an IMU thread, a WSS thread, and a timer thread. The data of the IMU is received, checked, or otherwise operated in the IMU thread. The data of the WSS is received, checked, or otherwise operated in the WSS thread. A system status equation is constructed, and prediction and updating are performed based on a motion status of the vehicle at a previous moment in the timer thread.

S602: The data processing module performs a check on the data from the one or more sensors.

In an embodiment, a check manner includes but is not limited to a rationality check, a cross-check, and the like.

For example, a process of the direct rationality check includes: The data processing module determines whether the angular velocity in the data of the IMU is greater than or equal to an angular velocity threshold. If the angular velocity in the data of the IMU is less than the angular velocity threshold, the check succeeds. Otherwise, the check fails.

For example, the data processing module determines whether the acceleration in the data of the IMU is greater than or equal to an acceleration threshold. If the acceleration in the data of the IMU is less than the acceleration threshold, the check succeeds. Otherwise, the check fails.

For example, the data processing module determines whether the wheel speeds of the four wheels in the data of the WSS are greater than or equal to a speed threshold. If all the wheel speeds of the four wheels are less than the speed threshold, the check succeeds. If the wheel speed of at least one of the four wheels is greater than or equal to the speed threshold, the check fails.

It should be understood that the data processing module may perform the direct rationality check based on one or more of angular velocity information, acceleration information, or the wheel speeds of the four wheels.

For example, a cross-check method is as follows:

(a) The data processing module may calculate a yaw speed $w_{odom}$ according to the following formula (1) and wheel speed data:

$$w_{odom} = \frac{fabs(V_{rr} - V_{rl})}{r} \tag{1}$$

$V_{rr}$ is a speed of a right rear wheel of the vehicle. $V_{rl}$ is a speed of a left rear wheel of the vehicle. r is a distance between the rear wheels of the vehicle, fabs indicates an absolute value.
(b) A vertical angular velocity $w_{imu}$ output by the IMU is obtained.
(c) Whether a difference between $w_{odom}$ and $w_{imu}$ is greater than or equal to a preset difference is determined.

For example, if the difference between $w_{odom}$ and $w_{imu}$ is less than a first preset difference, the check succeeds. Otherwise, it is considered that the vehicle slips, and the check fails.

S603: The data processing module obtains an online calibration result or an offline calibration result.

In an embodiment, the data processing module obtains the online sensor calibration result in an online real-time estimation manner. Alternatively, the data processing module obtains the offline sensor calibration result by reading an offline calibration parameter.

In an embodiment, the calibration result includes but is not limited to a wheel speed scale coefficient, a zero offset of a gyroscope and a zero offset of an accelerometer in the IMU, a lever arm parameter between sensors, and the like.

For example, the offline calibration result may include the wheel speed scale coefficient, the lever arm parameter, and the like, and may be obtained by reading a file or loading a parameter.

For example, the online calibration result includes the zero offset of the gyroscope and the zero offset of the accelerometer in the IMU, the wheel speed scale coefficient, and the like. In a main method, a to-be-estimated parameter, for example, the zero offset of the gyroscope and the zero offset of the accelerometer in the IMU, and the wheel speed scale coefficient, is extended to a status variable, and an online estimation is implemented via a Kalman filter.

In an embodiment, the data processing module may obtain both the online calibration result and the offline calibration result, to perform a cross-check on the online calibration result and the offline calibration result. For example, after obtaining an online calibration result and an offline calibration result of a same parameter, the data processing module may determine a difference between the online calibration result and the offline calibration result. If the difference is less than a second preset difference, it is considered that the calibration results are normal. Otherwise, it is considered that the calibration results are abnormal.

S604: The data processing module performs, based on the online calibration result or the offline calibration result, error compensation on sensor data on which the check succeeds.

In an embodiment, compensated data may be used as an input into an odometry fusion module (or the Kalman filter), or the compensated data may be used as an observed value in the odometry fusion module.

For example, an error-compensated item of the data of the IMU includes the zero offset of the gyroscope and the zero offset of the accelerometer. The zero offset of the gyroscope and the zero offset of the accelerometer obtained through calibration are subtracted based on the data of the IMU, and the compensated data is used as an input into the Kalman filter.

For example, the data of the WSS includes information such as the wheel speeds of the four wheels and the steering wheel angle. Error compensation of the data of the WSS is mainly performed based on rear wheel speed data and an average value of rear wheel speeds, impact on the scale coefficient is subtracted, and compensated data is used as an input into the Kalman filter.

S605: The odometry fusion module establishes a vehicle-based kinematic model.

In an embodiment, the vehicle kinematic model established by the odometry fusion module may be as the following formulas (2) to (8):

$$P_k^n = P_{k-1}^n + C_b^n V_{k-1}^b T + 0.5 * C_b^n a_{k-1}^b T^2 \tag{2}$$

$P_k^n$ is a location of the vehicle at a kth moment in an odometry coordinate system. $P_{k-1}^n$ is a location of the vehicle at a (k-1)th moment in the odometry coordinate system. $C_b^n$ is a rotation matrix from a vehicle coordinate system to the odometry coordinate system. $V_{k-1}^b$ is a speed of the vehicle at the (k-1)th moment in the vehicle coordinate system.

T is a time difference and is related to a period of the timer. $a_{k-1}^b$ is an acceleration of the vehicle at the (k-1)th moment in the vehicle coordinate system.

$$V_k^b = V_{k-1}^b + a_{k-1}^b T \tag{3}$$

$V_k^b$ is a speed of the vehicle at the kth moment in the vehicle coordinate system.

$$a_k^b = a_{k-1}^b \tag{4}$$

$a_k^b$ is an acceleration of the vehicle at the kth moment in the vehicle coordinate system.

$$\phi_k = \phi_{k-1} + \dot{\phi}_{K-1} T + \dot{\theta}_{k-1} \sin\phi_{k-1} \tan\theta_{k-1} T + \dot{\varphi}_{k-1} \cos\phi_{k-1} \tan\theta_{k-1} T \tag{5}$$

$\phi_k$ is a roll of the vehicle at the kth moment. $\phi_{k-1}$ is a roll of the vehicle at the (k-1)th moment. $\theta_{k-1}$ is a pitch of the vehicle at the (k-1)$^{th}$ moment. $\dot{\phi}_{K-1}$ is a roll rate of the vehicle at the (k-1)$^{th}$ moment. $\dot{\theta}_{k-1}$ is a pitch rate of the vehicle at the (k-1)$^{th}$ moment. $\dot{\varphi}_{k-1}$ is a yaw rate of the vehicle at the (k-1)$^{th}$ moment.

$$\theta_k = \theta_{k-1} + \dot{\theta}_{k-1} \cos \theta_{k-1} T - \dot{\varphi}_{k-1} \sin \phi_{k-1} T \tag{6}$$

$\theta_k$ is a pitch of the vehicle at the k$^{th}$ moment.

$$\varphi_k = \varphi_{k-1} + \dot{\theta}_{k-1} \frac{\sin \phi_{k-1}}{\cos \theta_{k-1}} T + \dot{\varphi}_{k-1} \frac{\cos \phi_{k-1}}{\cos \theta_{k-1}} T \tag{7}$$

$\varphi_k$ is a yaw of the vehicle at the k$^{th}$ moment. $\varphi_{k-1}$ is a yaw of the vehicle at the (k-1)$^{th}$ moment.

$$W_k^b = W_{k-1}^b \tag{8}$$

$W_k^b$ is an angular velocity of the vehicle at the k$^{th}$ moment in the vehicle coordinate system. $W_{k-1}^b$ is an angular velocity of the vehicle at the (k-1)$^{th}$ moment in the vehicle coordinate system.

The odometry fusion module may obtain an initial state transition matrix F according to one or more of the formulas (2) to (8).

It should be understood that the formulas (2) to (8) are merely examples. In this embodiment of this application, an estimation may be performed on a location, a speed, an acceleration, a roll, a pitch, a yaw, an angular velocity, and the like at a current moment according to another formula, equation, or function.

S606: The odometry fusion module performs prediction based on the kinematic model in S605 and the motion status at the previous moment, to obtain a motion status at the current moment. In an embodiment, the motion status at the previous moment (for example, the (k-1)$^{th}$ moment) may be pose information and covariance information output by the Kalman filter at the previous moment.

For example, the odometry fusion module may perform prediction on pose information at the current moment according to the following formula (9):

$$X(k) = F[k - 1, X(k - 1)] + W(k - 1) \tag{9}$$

$X(k)$ is pose information of the vehicle at the k$^{th}$ moment predicted by the odometry fusion module. $F[k - 1, X(k - 1)]$ is a state transition matrix at the (k-1)$^{th}$ moment. $W(k - 1)$ is system noise of the vehicle at the (k-1)$^{th}$ moment.

For example, the odometry fusion module may perform prediction on covariance matrix information at the current moment according to the following formula (10):

$$P(k \mid k - 1) = \psi(k)P(k - 1 \mid k - 1)\psi^T(k) + Q \tag{10}$$

$P(k \mid k - 1)$ is covariance matrix information that is of the vehicle at the k$^{th}$ moment and that is predicted by the odometry fusion module. First-order linearization is performed on the initial state transition matrix F in consideration of a non-linear feature of the initial state transition matrix F, to obtain a state transition matrix $\psi$. $P(k - 1 \mid k - 1)$ is covariance matrix information of the vehicle at the (k-1)$^{th}$ moment. Q is a mean square deviation of the system noise.

S607: The odometry fusion module uses the error-compensated data in S604 as an observed value for the Kalman filter.

For example, the odometry fusion module may use the following formula (11) as an observation equation:

$$Z(k) = H[k, X(k)] + V(k) \qquad (11)$$

$Z(k)$ is the observed value. $H[k, X(k)]$ is an observation matrix at the $k^{th}$ moment. $V(k)$ is observed noise at the $k^{th}$ moment.

S608: The odometry fusion module performs an optimal estimation through Kalman filtering and the motion status at the current moment predicted in S606 and the observed value in S607 to obtain the pose information and the covariance information of the vehicle at the current moment.

For example, a Kalman filtering gain may be calculated according to formula (12):

$$K(k) = P(k \mid k - 1)H^T(k) \, (H(k)P(k \mid k - 1)H^T(k) + R(k) \qquad (12)$$

$K(k)$ is the Kalman filtering gain. $R(k)$ is the mean square deviation of the observed noise. For example, the odometry fusion module may obtain updated pose information and covariance information according to the following formulas (13) and (14).

$$X(k) = X(k \mid k - 1) + K(Z(k) - H(k)X(k \mid k - 1)) \qquad (13)$$

$X(k)$ is pose information output by the Kalman filter. $X(k \mid k$ - 1) is a one-step predicted value of the state variable.

$$P(k) = (I - K(k)H(k)P(k \mid k - 1) \, (I - K(k)H(k))^T + K(k)R(k)K(k)^T \qquad (14)$$

$P(k)$ is covariance matrix information output by the Kalman filter. I is an identity matrix.

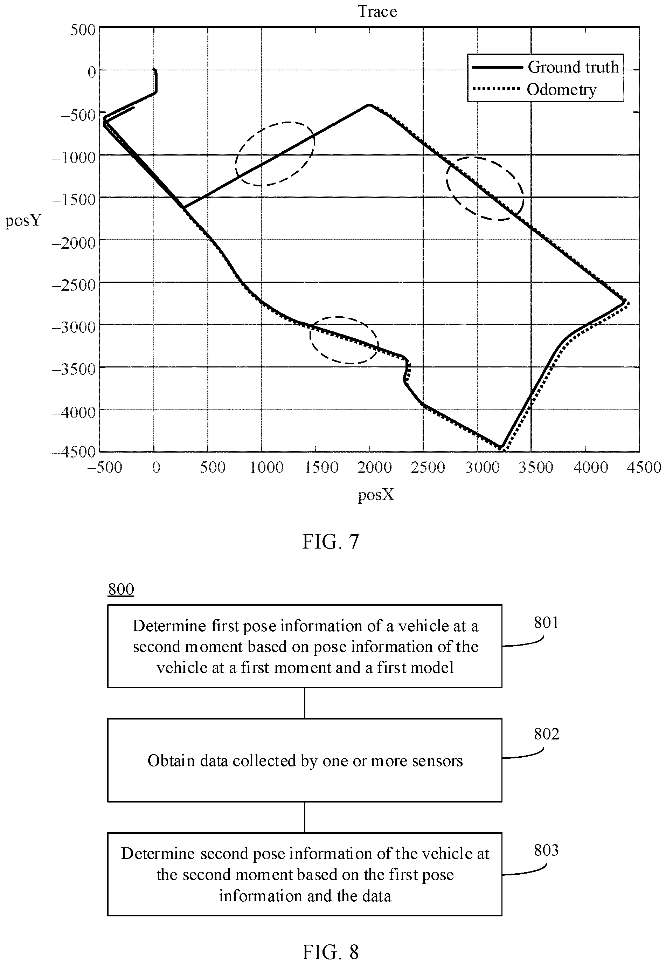

In this embodiment of this application, a test is further performed according to the data processing method. In the test, the data of the IMU collected by the vehicle, wheel speed data, and combined navigation data are used. In an entire vehicle traveling process, real-time kinematic (real-time kinematic, RTK) is a fixed state, and data obtained after post-processing of the combined navigation data is used as ground truth (ground truth). A traveling trajectory is shown in FIG. 7. To verify performance of the data processing method provided in this embodiment of this application when the IMU fails or is in a fault state, a case in which three segments of the IMU are abnormal is simulated, and each segment is 60s, as shown in a dashed line box in FIG. 7. A solid line indicates ground truth. A dotted line indicates a result output by an odometry, and the dotted line in the dashed line box is the result output by the odometry when the IMU fails.

It can be seen from the trajectory that when the IMU is abnormal or faulty, the odometry works normally and no obvious error increase occurs. To verify precision of the odometry, the foregoing part of traveling data is captured. A difference between current odometry data and the ground truth is calculated every time the vehicle travels 200 m. A statistical result is shown in Table 1 below.

**Table 1 Odometry error statistics table**

| Traveling distance (m) | Error (m) | Error (%) |
|---|---|---|
| 200.407 | 0.61 | 0.308 |
| 200.249 | 0.74 | 0.371 |
| 200.311 | 0.59 | 0.297 |
| 200.508 | 0.86 | 0.430 |

FIG. 8 is a schematic flowchart of a data processing method 800 according to an embodiment of this application. The method is applied to a vehicle, and the vehicle includes one or more sensors.

As shown in FIG. 8, the method 800 includes the following steps.

S801: The vehicle determines first pose information of the vehicle at a second moment based on pose information of the vehicle at a first moment and a first model, where the first model is a pose estimation model from the first moment to the second moment.

Optionally, the first model includes one or more of a location estimation model from the first moment to the second moment, a speed estimation model from the first moment to the second moment, an acceleration estimation model from the first moment to the second moment, a roll estimation model from the first moment to the second moment, a pitch estimation model from the first moment to the second moment, a yaw estimation model from the first moment to the second moment, and an angular velocity estimation model from the first moment to the second moment. For example, the location estimation model from the first moment to the second moment may be shown in the formula (2).

For example, the speed estimation model from the first moment to the second moment may be shown in the formula (3).

For example, the acceleration estimation model from the first moment to the second moment may be shown in the formula (4).

For example, the roll estimation model from the first moment to the second moment may be shown in the formula (5).

For example, the pitch estimation model from the first moment to the second moment may be shown in the formula (6).

For example, the yaw estimation model from the first moment to the second moment may be shown in the formula (7).

For example, the angular velocity estimation model from the first moment to the second moment may be shown in the formula (8).

It should be understood that the formulas (2) to (8) are merely examples. The location estimation model, the speed estimation model, the acceleration estimation model, the roll estimation model, the pitch estimation model, the yaw estimation model, or the angular velocity estimation model may be alternatively indicated by another formula, equation, or function. This is not specifically limited in this embodiment of this application.

Optionally, that the vehicle determines first pose information of the vehicle at a second moment based on pose information of the vehicle at a first moment and a first model includes: The vehicle determines an initial state transition matrix of the vehicle at the first moment based on the pose information of the vehicle at the first moment and the first model. The vehicle determines the first pose information based on the initial state transition matrix.

Optionally, that the vehicle determines the first pose information based on the initial state transition matrix includes: The vehicle determines the first pose information based on the initial state transition matrix and system noise at the first moment.

For example, the first pose information may be determined according to the formula (9).

Optionally, the method further includes: The vehicle determines first covariance information of the vehicle at the second moment based on covariance information of the vehicle at the first moment and the first model. The vehicle determines second covariance information of the vehicle at the second moment based on the first covariance information and the data.

Optionally, that the vehicle determines first covariance information of the vehicle at the second moment based on covariance information of the vehicle at the first moment and the first model includes: linearizing the initial state transition matrix at the first moment to obtain a state transition matrix; and determining the first covariance information based on the state transition matrix, the covariance information at the first moment, and a mean square deviation of the system noise. For example, the first covariance information may be determined according to the formula (10). S802: The vehicle obtains data collected by the one or more sensors.

Optionally, the one or more sensors may be one or more of an IMU, a WSS, an image shooting apparatus, or a LiDAR.

It should be understood that there is no actual sequence between S801 and S802.

S803: The vehicle determines second pose information of the vehicle at the second moment based on the first pose information and the data.

Optionally, before the vehicle determines second pose information of the vehicle at the second moment based on the first pose information and the data, the method further includes: The vehicle obtains a first calibration result, where the first calibration result includes an online calibration result and/or an offline calibration result. That the vehicle determines second pose information of the vehicle at the second moment based on the first pose information and the data includes: The vehicle performs error compensation on the data based on the first calibration result to obtain error-compensated data. The vehicle determines the second pose information based on the first pose information and the error-compensated data.

Optionally, the first calibration result includes one or more of a wheel speed scale coefficient, a zero offset of an inertial measurement unit IMU, and a lever arm parameter.

Optionally, before the vehicle performs error compensation on the data based on the first calibration result, the method further includes: The vehicle performs a check on the data, where the check includes one or more of a rationality check and a cross-check.

Optionally, that the vehicle determines second pose information of the vehicle at the second moment based on the first pose information and the data includes: The vehicle performs an optimal estimation based on the first pose information and the data to obtain the second pose information. Optionally, that the vehicle performs an optimal estimation based on the first pose information and the data includes: The vehicle performs the optimal estimation through Kalman filtering based on the first pose information and the data. Alternatively, the vehicle performs the optimal estimation through non-Kalman filtering based on the first pose information and the data.

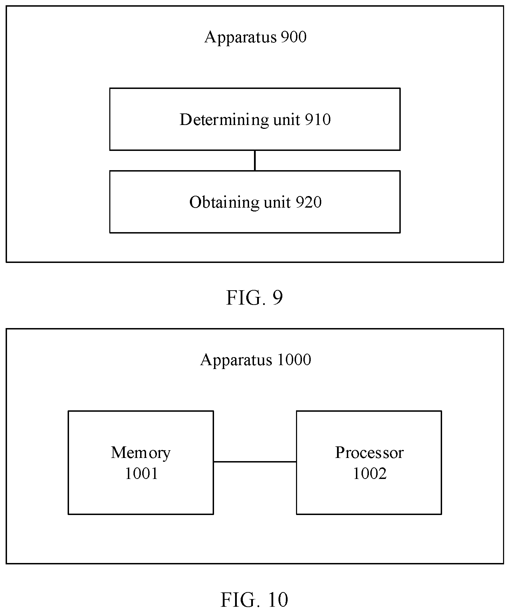

FIG. 9 is a schematic block diagram of a data processing apparatus 900 according to an embodiment of this application. As shown in FIG. 9, this apparatus 900 includes:

a determining unit 910, configured to determine first pose information of a vehicle at a second moment based on pose information of the vehicle at a first moment and a first model, where the first model is a pose estimation model from the first moment to the second moment; and
an obtaining unit 920, configured to obtain data collected by one or more sensors.

The determining unit 910 is further configured to determine second pose information of the vehicle at the second moment based on the first pose information and the data.

Optionally, the determining unit 910 is specifically configured to: determine an initial state transition matrix of the vehicle at the first moment based on the pose information of the vehicle at the first moment and the first model; and determine the first pose information based on the initial state transition matrix.

Optionally, the determining unit 910 is further configured to: determine first covariance information of the vehicle at the second moment based on covariance information of the vehicle at the first moment and the first model; and determine second covariance information of the vehicle at the second moment based on the first covariance information and the data.

Optionally, the obtaining unit 920 is further configured to obtain a first calibration result before the determining unit 910 determines the second pose information of the vehicle at the second moment based on the first pose information and the data, where the first calibration result includes an online calibration result and/or an offline calibration result.

The determining unit 910 is specifically configured to: perform error compensation on the data based on the first calibration result to obtain error-compensated data; and determine the second pose information based on the first pose information and the error-compensated data. Optionally, the first calibration result includes one or more of a wheel speed scale coefficient, a zero offset of an inertial measurement unit IMU, and a lever arm parameter.

Optionally, the apparatus 900 further includes: a checking unit, configured to perform a check on the data before the determining unit performs error compensation on the data based on the first calibration result.

Optionally, the check includes one or more of a rationality check and a cross-check.

Optionally, the determining unit 910 is specifically configured to perform an optimal estimation based on the first pose information and the data to obtain the second pose information.

An embodiment of this application further provides an apparatus. The apparatus includes a processing unit and a storage unit. The storage unit is configured to store instructions, and the processing unit executes the instructions stored in the storage unit, so that the apparatus performs the data processing method in the foregoing embodiments.

FIG. 10 is a schematic block diagram of a data processing apparatus 1000 according to an embodiment of this application. The apparatus 1000 includes: a memory 1001, configured to store computer instructions; and a processor 1002, configured to execute the computer instructions stored in the memory, so that the apparatus 1000 performs the data processing method.

An embodiment of this application further provides a vehicle. The vehicle may include the apparatus 900 or the apparatus 1000.

An embodiment of this application further provides a computer program product. The computer program product includes computer program code, and when the computer program code is run on a computer, the computer is enabled to perform the method.

An embodiment of this application further provides a computer-readable medium. The computer-readable medium stores program code, and when the computer program code is run on a computer, the computer is enabled to perform the method.

In an implementation process, steps in the foregoing methods can be implemented by using a hardware integrated logical circuit in the processor, or by using instructions in a form of software. The method disclosed according to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should also be understood that in embodiments of this application, the memory may include a read-only memory and a random access memory, and provide instructions and data to the processor. In embodiments of this application, "first", "second", and various numbers are merely used for differentiation for ease of description, and are not used to limit the scope of embodiments of this application. For example, "first", "second", and various numbers are used to distinguish between different pipelines, through holes, or the like.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, wherein the method is applied to a vehicle, the vehicle comprises one or more sensors, and the method comprises:

   determining a first pose information of the vehicle at a second moment based on pose information of the vehicle at a first moment and a first model, wherein the first model is a pose estimation model from the first moment to the second moment;
   obtaining data collected by the one or more sensors; and
   determining a second pose information of the vehicle at the second moment based on the first pose information and the data.

2. The method according to claim 1, wherein the determining first pose information of the vehicle at a second moment based on pose information of the vehicle at a first moment and a first model comprises:

determining an initial state transition matrix of the vehicle at the first moment based on the pose information of the vehicle at the first moment and the first model; and
determining the first pose information based on the initial state transition matrix.

3. The method according to claim 1 or 2, wherein the method further comprises:

determining first covariance information of the vehicle at the second moment based on covariance information of the vehicle at the first moment and the first model; and
determining second covariance information of the vehicle at the second moment based on the first covariance information and the data.

4. The method according to any one of claims 1 to 3, wherein before the determining second pose information of the vehicle at the second moment based on the first pose information and the data, the method further comprises:

obtaining a first calibration result, wherein the first calibration result comprises an online calibration result and/or an offline calibration result; and
the determining second pose information of the vehicle at the second moment based on the first pose information and the data comprises:

performing error compensation on the data based on the first calibration result to obtain error-compensated data; and
determining the second pose information based on the first pose information and the error-compensated data.

5. The method according to claim 4, wherein the first calibration result comprises one or more of a wheel speed scale coefficient, a zero offset of an inertial measurement unit IMU, and a lever arm parameter.

6. The method according to claim 4 or 5, wherein before the performing error compensation on the data based on the first calibration result, the method further comprises:
performing a check on the data, wherein the check comprises one or more of a rationality check and a cross-check.

7. The method according to any one of claims 1 to 6, wherein the determining second pose information of the vehicle at the second moment based on the first pose information and the data comprises:
performing an optimal estimation based on the first pose information and the data to obtain the second pose information.

8. A data processing apparatus, comprising:

a determining unit, configured to determine first pose information of a vehicle at a second moment based on pose information of the vehicle at a first moment and a first model, wherein the first model is a pose estimation model from the first moment to the second moment; and
an obtaining unit, configured to obtain data collected by one or more sensors, wherein
the determining unit is further configured to determine second pose information of the vehicle at the second moment based on the first pose information and the data.

9. The apparatus according to claim 8, wherein the determining unit is specifically configured to:

determine an initial state transition matrix of the vehicle at the first moment based on the pose information of the vehicle at the first moment and the first model; and
determine the first pose information based on the initial state transition matrix.

10. The apparatus according to claim 8 or 9, wherein

the determining unit is further configured to: determine first covariance information of the vehicle at the second moment based on covariance information of the vehicle at the first moment and the first model; and determine second covariance information of the vehicle at the second moment based on the first covariance information and the data.

11. The apparatus according to any one of claims 8 to 10, wherein

the obtaining unit is further configured to obtain a first calibration result before the determining unit determines the second pose information of the vehicle at the second moment based on the first pose information and the data, wherein the first calibration result comprises an online calibration result and/or an offline calibration result; and

the determining unit is specifically configured to: perform error compensation on the data based on the first calibration result to obtain error-compensated data; and

determine the second pose information based on the first pose information and the error-compensated data.

12. The apparatus according to claim 11, wherein the first calibration result comprises one or more of a wheel speed scale coefficient, a zero offset of an IMU, and a lever arm parameter.

13. The apparatus according to claim 11 or 12, wherein the apparatus further comprises:
a checking unit, configured to perform a check on the data before the determining unit performs error compensation on the data based on the first calibration result, wherein the check comprises one or more of a rationality check and a cross-check.

14. The apparatus according to any one of claims 8 to 13, wherein the determining unit is specifically configured to perform an optimal estimation based on the first pose information and the data to obtain the second pose information.

15. A data processing apparatus, comprising:

a memory, configured to store computer instructions; and

a processor, configured to execute the computer instructions stored in the memory, to enable the apparatus to perform the method according to any one of claims 1 to 7.

16. A vehicle, comprising the apparatus according to any one of claims 8 to 15.

17. A computer-readable storage medium, wherein the computer-readable medium stores program code, and when the program code is run on a computer, the computer is enabled to perform the method according to any one of claims 1 to 7.

18. A chip, wherein the chip comprises a processor and a data interface, and the processor reads, through the data interface, instructions stored in a memory, to perform the method according to any one of claims 1 to 7.

Vehicle 100

Sensing system 120

Computing platform 150

Processor 151

Memory 152

Instructions 153

FIG. 1

Cloud server 200

Network

Vehicle 100

FIG. 2

| IMU | WSS | LO | VO | ... |

Laser positioning ← Odometry fusion module → Visual positioning

Fusion | Planning and control | Prediction | Others

FIG. 3

FIG. 4

FIG. 5

<u>600</u>

```
┌──────────────────────────────────────────────────────────────────────┐
│                       Data processing module                           │
│                                                                        │
│   ┌─────────────────────┐  601    ┌─────────────────────┐  603        │
│   │  Obtain data collected│        │  Obtain an online     │           │
│   │  by one or more       │        │  calibration result or an│         │
│   │  sensors              │        │  offline calibration result│        │
│   └─────────────────────┘         └─────────────────────┘            │
│             │                                                          │
│             ▼                                                          │
│   ┌─────────────────────┐  602                                        │
│   │  Perform a check on   │                                           │
│   │  the data from the one│                                           │
│   │  or more sensors      │                                           │
│   └─────────────────────┘                                            │
│             │                                                          │
│             ▼                                                          │
│   ┌─────────────────────┐  604                                        │
│   │  Perform, based on the│                                           │
│   │  online calibration   │                                           │
│   │  result or the offline│◄──────────────────────                    │
│   │  calibration result,  │                                           │
│   │  error compensation on│                                           │
│   │  sensor data on which │                                           │
│   │  the check succeeds   │                                           │
│   └─────────────────────┘                                            │
└──────────────────────────────────────────────────────────────────────┘
```

Data processing module

Obtain data collected by one or more sensors — 601

Obtain an online calibration result or an offline calibration result — 603

Perform a check on the data from the one or more sensors — 602

Perform, based on the online calibration result or the offline calibration result, error compensation on sensor data on which the check succeeds — 604

Odometry fusion module

Establish a vehicle-based kinematic model — 605

Perform prediction based on a motion status at a previous moment to obtain a motion status at a current moment — 606

Use error-compensated data in S604 as an observed value of a Kalman filter — 607

Perform an optimal estimation through Kalman filtering and the motion status at the current moment predicted in S606 and the observed value in S607 to obtain pose information and covariance information of a vehicle at the current moment — 608

The odometry fusion module outputs the pose information and the covariance information

FIG. 6

Trace

FIG. 7

800

Determine first pose information of a vehicle at a
second moment based on pose information of the
vehicle at a first moment and a first model ——— 801

Obtain data collected by one or more sensors ——— 802

Determine second pose information of the vehicle at
the second moment based on the first pose
information and the data ——— 803

FIG. 8

Apparatus 900

Determining unit 910

Obtaining unit 920

FIG. 9

Apparatus 1000

Memory
1001

Processor
1002

FIG. 10

## INTERNATIONAL SEARCH REPORT

| International application No. |
|---|
| **PCT/CN2022/113271** |

### A. CLASSIFICATION OF SUBJECT MATTER

G01S 19/46(2010.01)i; G01S 19/47(2010.01)i; G01S 17/931(2020.01)i; G01S 17/86(2020.01)i; G01S 13/931(2020.01)i; G01S 13/86(2006.01)i; G01S 15/931(2020.01)i; G01S 15/86(2020.01)i; G01C 21/16(2006.01)i; G01C 22/00(2006.01)i

According to International Patent Classification (IPC) or to both national classification and IPC

### B. FIELDS SEARCHED

Minimum documentation searched (classification system followed by classification symbols)

G01S19/-,G01S17/-,G01S13/-,G01S15/-,G01C21/-,G01C22/-

Documentation searched other than minimum documentation to the extent that such documents are included in the fields searched

Electronic data base consulted during the international search (name of data base and, where practicable, search terms used)

EPODOC, WPI, CNKI, CNPAT, CNABS, CNTXT, ENTXTC: 车辆, 智能驾驶, 导航, 位姿, 传感器, 采集, 检测, 数据, 位置, 坐标, 里程, 速度, 模型, 协方差, 卡尔曼, 滤波, 更新, navigation, car, sensor, vehicle, velocity, acceleration, position, signal, data, model, covariance w matrices, Kalman w filter, update

### C. DOCUMENTS CONSIDERED TO BE RELEVANT

| Category* | Citation of document, with indication, where appropriate, of the relevant passages | Relevant to claim No. |
|---|---|---|
| PX | CN 114167470 A (HUAWEI TECHNOLOGIES CO., LTD.) 11 March 2022 (2022-03-11) claims 1-18 | 1-18 |
| X | CN 110988951 A (CHINA UNIVERSITY OF GEOSCIENCES, BEIJING) 10 April 2020 (2020-04-10) description, paragraphs [0006]-[0063] | 1-18 |
| X | CN 111098335 A (ZHEJIANG XINYIHUA INTELLIGENT TECHNOLOGY CO., LTD.) 05 May 2020 (2020-05-05) description, paragraphs [0056]-[0126] | 1-18 |
| X | CN 111458733 A (WUHAN KOTEI TECHNOLOGY CORPORATION) 28 July 2020 (2020-07-28) description, paragraphs [0005]-[0118] | 1-18 |
| A | CN 111751857 A (CHINA FAW CO., LTD.) 09 October 2020 (2020-10-09) entire document | 1-18 |
| A | US 2012086598 A1 (CANADIAN SPACE AGENCY) 12 April 2012 (2012-04-12) entire document | 1-18 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 October 2022** | **25 October 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

# EP 4 414 749 A1

**INTERNATIONAL SEARCH REPORT**

International application No.

**PCT/CN2022/113271**

| C. | DOCUMENTS CONSIDERED TO BE RELEVANT | |
|---|---|---|
| Category* | Citation of document, with indication, where appropriate, of the relevant passages | Relevant to claim No. |
| A | US 2003149528 A1 (LIN C.) 07 August 2003 (2003-08-07)<br>entire document | 1-18 |

Form PCT/ISA/210 (second sheet) (January 2015)

INTERNATIONAL SEARCH REPORT
Information on patent family members

International application No.

**PCT/CN2022/113271**

| Patent document cited in search report | | | Publication date (day/month/year) | Patent family member(s) | | | Publication date (day/month/year) |
|---|---|---|---|---|---|---|---|
| CN | 114167470 | A | 11 March 2022 | None | | | |
| CN | 110988951 | A | 10 April 2020 | None | | | |
| CN | 111098335 | A | 05 May 2020 | CN | 111098335 | B | 08 June 2021 |
| CN | 111458733 | A | 28 July 2020 | CN | 111458733 | B | 24 May 2022 |
| CN | 111751857 | A | 09 October 2020 | None | | | |
| US | 2012086598 | A1 | 12 April 2012 | None | | | |
| US | 2003149528 | A1 | 07 August 2003 | US | 6697736 | B2 | 24 February 2004 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111276896